(19) Europäisches Patentamt
European Patent Office
Office européen des brevets

(11) **EP 2 726 317 B1**

(12) **EUROPÄISCHE PATENTSCHRIFT**

(45) Veröffentlichungstag und Bekanntmachung des Hinweises auf die Patenterteilung:
**07.04.2021 Patentblatt 2021/14**

(21) Anmeldenummer: **11749797.4**

(22) Anmeldetag: **19.08.2011**

(51) Int Cl.:
**B60L 53/63** (2019.01)    **B60L 53/67** (2019.01)

(86) Internationale Anmeldenummer:
**PCT/EP2011/064294**

(87) Internationale Veröffentlichungsnummer:
**WO 2013/026464 (28.02.2013 Gazette 2013/09)**

(54) **BEREITSTELLUNG ELEKTRISCHER ENERGIE**

MAKING AVAILABLE ELECTRICAL ENERGY

FOURNITURE D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.05.2014 Patentblatt 2014/19**

(73) Patentinhaber: **Siemens Aktiengesellschaft 80333 München (DE)**

(72) Erfinder:
• **EGER, Kolja**
**85521 Ottobrunn (DE)**
• **KEPKA, Alexander**
**90427 Nürnberg (DE)**
• **ZWIRLEIN, Andreas**
**81379 München (DE)**
• **VON WICHERT, Georg**
**80997 München (DE)**

(56) Entgegenhaltungen:
**DE-A1-102009 036 816**

EP 2 726 317 B1

Printed by Jouve, 75001 PARIS (FR)

**Beschreibung**

Die Erfindung betrifft ein Verfahren und eine Vorrichtung zur Bereitstellung elektrischer Energie, insbesondere betreffend den Bereich der Elektromobilität bzw. das Laden von Elektro-Fahrzeugen.

Für die Elektromobilität ist eine Infrastruktur erforderlich, die ein Aufladen von Elektro-Fahrzeugen aus einem Stromnetz ermöglicht. Die Elektro-Fahrzeuge werden vorzugsweise über Ladestationen (z.B. öffentlich zugängliche Stromtankstellen) angeschlossen und aufgeladen. Weiterhin gibt es zusätzliche Komponenten bzw. Funktionen zur Authentifizierung, Abrechnung und/oder Überwachung der Ladevorgänge.

Hierbei ist es problematisch, bei einer Vielzahl von Ladevorgängen, die zu unterschiedlichen Zeitpunkten initiiert werden, die verfügbare elektrische Energie bzw. den Ladestrom und die Netzkapazitäten effizient und fair zu verteilen.

[DE 10 2009 036 816 A1] betrifft ein Verfahren und eine Vorrichtung zur Steuerung von Ladestationen für Elektrofahrzeuge. Dabei werden zwischen zu einer Gruppe zusammengefassten Ladestationen Ist-Ladeparameter ausgetauscht und basierend darauf eine Lastprognose für die Gruppe erstellt. Abhängig von der Lastprognose werden Soll-Ladeparameter für die Ladestationen bestimmt.

Die Aufgabe der Erfindung besteht darin, einen effizienten und für das Versorgungsnetz schonenden Ansatz zum Laden von Elektro-Fahrzeugen anzugeben.

Diese Aufgabe wird gemäß den Merkmalen der unabhängigen Ansprüche gelöst. Bevorzugte Ausführungsformen sind insbesondere den abhängigen Ansprüchen entnehmbar.

Zur Lösung der Aufgabe wird ein Verfahren zur Bereitstellung elektrischer Energie angegeben, bei dem eine Lastverteilung für zumindest eine Sitzung durch eine schrittweise Zuteilung der elektrischen Energie eingestellt wird.

Bei der schrittweisen Zuteilung der elektrischen Energie kann es sich um eine stufenweise, z.B. zeitlich abgestufte Zuweisung der elektrischen Energie, an die mindestens eine Sitzung handeln. Auch kann die schrittweise Zuteilung (quasi-)kontinuierlich erfolgen, indem die elektrische Energie graduell mit dem Zeitverlauf angepasst wird.

Bei der schrittweisen Zuteilung der elektrischen Energie ist es von Vorteil, dass eine Lastspitze, die durch eine neue oder geänderte Lastverteilung verursacht sein könnte, wirksam vermieden wird.

Beispielsweise wird mehreren Sitzungen der jeweilige Ladestrom zumindest teilweise zu unterschiedlichen Zeitpunkten mitgeteilt.

Bei der Sitzung handelt es sich beispielsweise um einen Ladevorgang für ein Elektro-Fahrzeug. Hierbei können z.B. von einer zentralisierten Einheit, z.B. einem Lademanagement, eine Vielzahl von Sitzungen verwaltet werden. Die bereitgestellte elektrische Energie kann beispielsweise einen Ladestrom für die jeweilige Sitzung umfassen.

Hierbei sei angemerkt, dass der Begriff Energie insbesondere umfasst bzw. betrifft: einen Strom, eine Spannung, eine Leistung und/oder eine Energie im engeren Sinne.

Erfindungsgemäß wird die Lastverteilung für mehrere Sitzungen schrittweise eingestellt, indem die elektrischen Energien für die mehreren Sitzungen nacheinander eingestellt werden.

Eine nächste Ausgestaltung ist es, dass die schrittweise Zuteilung der elektrischen Energie mehrere Schritte umfasst, zwischen denen eine vorgegebene Zeitdauer liegt. Insbesondere kann zwischen den einzelnen Schritten abgewartet werden, bis eine Sitzung eine vorgegebene (z.B. niedrigere) elektrische Energie eingestellt hat und/oder erhält.

Auch ist es eine Ausgestaltung, dass die elektrische Energie weiter reduziert wird oder abgeschaltet wird, falls nach Ablauf der vorgegebenen Zeitdauer die zugeteilte elektrische Energie nicht eingestellt ist.

Eine Weiterbildung besteht darin, dass die vorgegebene Zeitdauer konstant oder variabel ist.

Insbesondere können die mehreren Schritte in etwa durch gleiche Zeitdauern oder durch unterschiedliche Zeitdauern voneinander getrennt sein.

Erfindungsgemäß ist vorgesehen, dass die Lastverteilung für mehrere Sitzungen eingestellt wird, indem

-   die Sitzungen, für die die elektrische Energie reduziert werden soll, eingestellt werden;
-   die Sitzungen, für die die elektrische Energie erhöht werden soll, eingestellt werden.

Erfindungsgemäß werden in einem ersten Schritt nur solche Ladestationen eingestellt, für die der neue Ladestrom gegenüber dem vorherigen Ladestrom reduziert werden soll. In einem zweiten Schritt können dann solche Ladestationen eingestellt werden, für die der Ladestrom im Vergleich zum vorherigen Ladestrom erhöht werden soll. Erfindungsgemäß wird zuvor geprüft (z.B. gemessen), ob der reduzierte Ladestrom auch erfolgreich eingestellt bzw. erreicht wurde.

Eine andere Ausgestaltung ist es, dass die Sitzungen mit der erhöhten elektrischen Energie eingestellt werden, falls eine aktuell entnommene elektrische Energie kleiner oder gleich einem Sollwert für die elektrische Energie ist.

Eine Weiterbildung besteht darin, dass zumindest ein Teil einer für eine Sitzung bereitgestellten elektrischen Energie, der nicht abgerufen wurde, mindestens einer anderen Sitzung bereitgestellt wird.

Diese Lösung hat den Vorteil, dass frei werdende oder nicht eingeforderte Ressourcen anderen Sitzungen zugeteilt werden können. Somit blockiert ein Verbraucher oder eine Ladestation nicht zwangsläufig die gesamte bereitgestellte Energie, sondern der Überschuss der nicht abgerufenen Energie kann zumindest einer weiteren Sitzung zugewiesen werden. Dies hat auch den Vorteil, dass eine Korrektur der bereitgestellten Energien möglich ist und somit z.B. eine initiale Planung der elektrischen Energien, die für die einzelnen Sitzungen reserviert werden, durch die Möglichkeit der Korrektur eine geringere Genauigkeit aufweisen muss. Mit anderen Worten kann die initiale Vergabe der Ressourcen einen höheren Fehler aufweisen, der z.B. während der tatsächlich durchgeführten Ladevorgänge sukzessive korrigiert werden kann.

Ein Vorteil besteht darin, dass ein vorgegebenes (Energie- oder Last-)Profil, das z.B. erzeugt bzw. vereinbart (z.B. eingekauft) wurde, eingehalten und/oder effizient genutzt wird.

Hierbei sei auch angemerkt, dass die Kommunikation zwischen dem Elektro-Fahrzeug und der Ladeinfrastruktur unidirektional oder bidirektional ausgeführt sein kann. Beispielsweise kann das Elektro-Fahrzeug seine benötigte Energie bzw. gewünschte Leistungsaufnahme der Ladeinfrastruktur explizit mitteilen. Auch kann aus dem Verhalten des Elektro-Fahrzeugs bzw. einer Ladestation ermittelt werden, welche elektrische Energie dem Elektro-Fahrzeug bereitgestellt wird. Insbesondere ist es eine Option, dass ein Ladestrom zwischen dem Elektro-Fahrzeug und der Ladeinfrastruktur ausgehandelt wird.

Eine Weiterbildung ist es, dass diejenige elektrische Energie, die nicht von der Sitzung abgerufen wurde, vollständig oder im Wesentlichen vollständig der mindestens einen anderen Sitzung bereitgestellt wird.

Eine andere Weiterbildung ist es, dass ein Teil der elektrischen Energie, die nicht von der Sitzung abgerufen wurde, der mindestens einen anderen Sitzung bereitgestellt wird.

Hierbei kann die Menge der elektrischen Energie, die der mindestens einen anderen Sitzung bereitgestellt wird, um einen vorgegebenen Betrag reduziert werden. Dies ermöglicht es der Sitzung, kurzfristig eine bis zu diesem Betrag erhöhte elektrische Energie anzufordern und auch zu erhalten (Sicherheitsmarge).

Insbesondere ist es eine Weiterbildung, dass die der Sitzung bereitgestellte elektrische Energie von einem Typ der Sitzung abhängt.

Beispielsweise kann durch den Typ der Sitzung vorgegeben sein, dass es sich um eine Sitzung handelt, die einen Schuko-Stecker verwendet und nur mit einer konstanten elektrischen Energie versorgt werden soll. Optional kann abhängig von dem Typ der Sitzung die bereitgestellte elektrische Energie konstant bzw. nahezu konstant oder variabel eingestellt werden.

Auch ist es eine Weiterbildung, dass zumindest der Teil der für die Sitzung bereitgestellten elektrischen Energie, der nicht abgerufen wurde, der mindestens einen anderen Sitzung bereitgestellt wird, wenn zumindest der Teil der nicht abgerufenen elektrischen Energie einen vorgegebenen Schwellwert erreicht oder überschreitet.

Ferner ist es eine Weiterbildung, dass zumindest der Teil der für die Sitzung bereitgestellten elektrischen Energie, der nicht abgerufen wurde, der mindestens einen anderen Sitzung bereitgestellt wird, wenn ein Maximum des zu unterschiedlichen Zeiten bestimmten nicht abgerufenen Teils der elektrischen Energie den vorgegebenen Schwellwert erreicht oder überschreitet.

Hierdurch wird verhindert, dass kleine Mengen frei werdender elektrischer Energie Anlass zur Umverteilung bieten und es somit zu einer Vielzahl ineffizienter Umverteilungen geringer Mengen elektrischer Energie kommt.

Im Rahmen einer zusätzlichen Weiterbildung wird zumindest der Teil der für die Sitzung bereitgestellten elektrischen Energie, der nicht abgerufen wurde, der mindestens einen anderen Sitzung für eine vorgegebene Zeitdauer bereitgestellt.

Eine nächste Weiterbildung besteht darin, dass

- nach Ablauf der vorgegebenen Zeitdauer ermittelt wird, welche elektrische Energie von der Sitzung angefordert wird;
- falls die der Sitzung bereitgestellte elektrische Energie nicht abgerufen wird, zumindest ein Teil der bereitgestellten elektrischen Energie der mindestens einen anderen Sitzung bereitgestellt wird.

Insoweit kann eine vorgegebene Zeitdauer bestimmt werden, nach deren Ablauf eine erneute Zuteilung der elektrischen Energie erfolgt.

Auch ist es eine Möglichkeit, dass die bereitgestellte elektrische Energie ein Ladestrom für einen elektrischen Verbraucher oder eine Leistungsaufnahme des elektrischen Verbrauchers ist.

Auch ist es eine weitere Ausgestaltung, dass der elektrische Verbraucher ein Elektro-Fahrzeug ist.

Ferner erfindungsgemäß umfasst die Sitzung einen Ladevorgang für ein Elektro-Fahrzeug.

Bei dem hier beschriebenen Ansatz kann es sich um eine Hardware-Komponente und/oder um eine Software-Funktionalität handeln. Es wird insbesondere ein Lastmanagement für ein Ladesystem vorgestellt umfassend z.B. mehrere Ladestationen, die beispielsweise Teil einer öffentlich zugänglichen Stromtankstelle sind. Ein Lastmanagement bestimmt eine Lastverteilung unter Einhaltung verschiedener Bedingungen, die sowohl wirtschaftlicher als auch (netz-)technischer Art sein können. Beispielsweise können so Netzengpässe vermieden werden und gleichzeitig kann sichergestellt werden, dass z.B. ein Ladevorgang effizient und netzschonend durchgeführt wird.

Die vorstehend genannte Aufgabe wird auch gelöst durch eine Vorrichtung zum Bereitstellen elektrischer Energie mit einer Verarbeitungseinheit, die derart eingerichtet ist, dass

- eine Lastverteilung für zumindest eine Sitzung durch eine schrittweise Zuteilung der elektrischen Energie einstellbar ist.

Eine Ausgestaltung ist es, dass die Verarbeitungseinheit derart eingerichtet ist, dass zumindest ein Teil einer für eine Sitzung bereitgestellten elektrischen Energie, der nicht abgerufen wurde, mindestens einer anderen Sitzung bereitstellbar ist.

Eine Option besteht darin, dass die Vorrichtung zumindest teilweise in einer Ladestation eines Elektro-Fahrzeugs angeordnet ist.

Die hier genannte Verarbeitungseinheit kann insbesondere als eine Prozessoreinheit und/oder eine zumindest teilweise festverdrahtete oder logische Schaltungsanordnung ausgeführt sein, die beispielsweise derart eingerichtet ist, dass das Verfahren wie hierin beschrieben durchführbar ist. Besagte Verarbeitungseinheit kann jede Art von Prozessor oder Rechner oder Computer mit entsprechend notwendiger Peripherie (Speicher, Input/Output-Schnittstellen, Ein-Ausgabe-Geräte, etc.) sein oder umfassen.

Die vorstehenden Erläuterungen betreffend das Verfahren gelten für die Vorrichtung entsprechend. Die Vorrichtung kann in einer Komponente oder verteilt in mehreren Komponenten ausgeführt sein.

Die hier vorgestellte Lösung umfasst ferner ein Computerprogrammprodukt, das direkt in einen Speicher eines digitalen Computers ladbar ist, umfassend Programmcodeteile, die dazu geeignet sind, Schritte des hier beschriebenen Verfahrens durchzuführen.

Weiterhin wird das oben genannte Problem gelöst mittels eines computerlesbaren Speichermediums, z.B. eines beliebigen Speichers, umfassend von einem Computer ausführbare Anweisungen (z.B. in Form von Programmcode) die dazu geeignet sind, dass der Computer Schritte des hier beschriebenen Verfahrens durchführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:

Fig.1    ein schematisches Schaubild zum Laden von Elektro-Fahrzeugen über ein Energienetz;

Fig.2    eine schematische Architektur eines dezentralen Last-managements, das den Ansatz "Wahl eines Masters" ermöglicht bzw. unterstützt;

Fig.3    ein beispielhaftes Zustandsdiagramm für eine Ladestation;

Fig.4    eine schematische Darstellung einer beispielhaften Architektur für ein Lastmanagement in Verbindung mit einer (z.B. zentralen) Ladesteuerungseinrichtung für Elektro-Fahrzeuge;

Fig.5    ein Diagramm, dass die zeitlichen Abläufe unterschiedlicher Ladevorgänge für drei Elektro-Fahrzeuge zeigt;

Fig.6    eine schematische Darstellung zur Veranschaulichung eines Änderungsmanagements für das Lastmanagement.

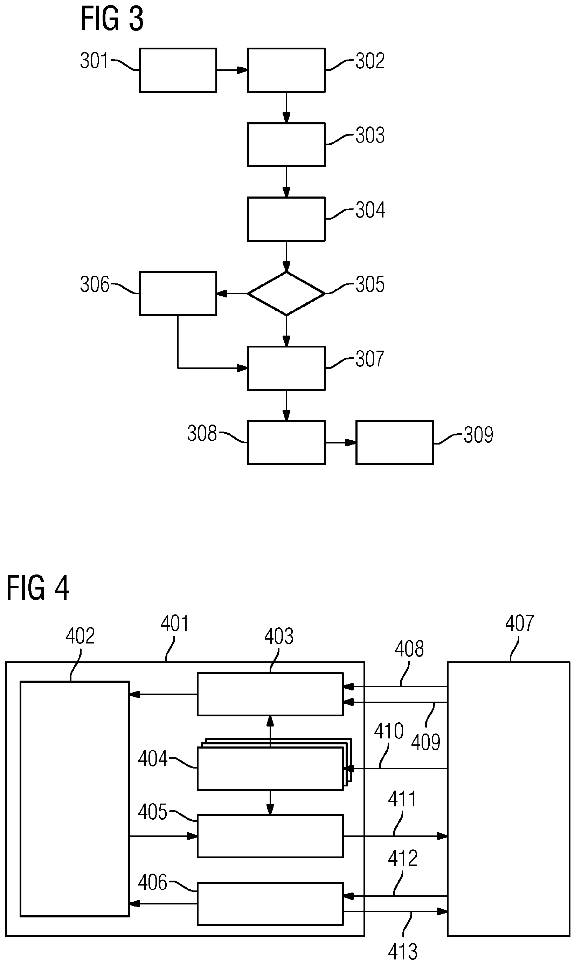

Fig.4 zeigt eine schematische Darstellung einer beispielhaften Architektur für ein Lastmanagement 401 in Verbindung mit einer (z.B. zentralen) Ladesteuerungseinrichtung 407 für Elektro-Fahrzeuge. Die Ladesteuerungseinrichtung 407 kommuniziert beispielsweise mit mindestens einer Ladestation (nicht in Fig.4 dargestellt), wobei an jeder Ladestation mindestens ein elektrischer Verbraucher mit einem Energiespeicher, z.B. ein Elektro-Fahrzeug, angeschlossen sein kann.

Das Lastmanagement 401 umfasst ein Lastmanagement-Verfahren 402, ein Sitzungs-Management 403, ein Änderungsmanagement 405 für das Lastmanagement, eine Sitzungskontrolle 404 (vorzugsweise für jede Sitzung) sowie eine Parametrisierung 406. Eine Sitzung bezeichnet vorzugsweise einen (Lade-)Vorgang eines Elektro-Fahrzeugs, das z.B. an der erwähnten Ladestation angeschlossen ist. Die Sitzung wird hier auch als Session bezeichnet.

Bei dem Lastmanagement-Verfahren 402, dem Sitzungs-Management 403, dem Änderungsmanagement 405, der Sitzungskontrolle 404 sowie der Parametrisierung 406 handelt es sich jeweils um eine (funktionale) Komponente des Lastmanagements 401, die ggf. in Software und/oder Hardware auf einem Gerät oder auf mehreren Geräten realisiert sein kann. Der Einfachheit halber wird nachfolgend in der vorgestellten Nomenklatur auf die einzelnen funktionalen Komponenten 403 bis 406 Bezug genommen, ohne dass jeweils darauf hingewiesen wird, dass es sich dabei um eine Funktion oder um eine funktionale Komponente handeln kann. Ergänzend sei darauf hingewiesen, dass die funktionale Trennung gemäß Fig.4 einer übersichtlichen Darstellung dient; eine konkrete Implementierung kann mehrere dieser funktionalen Blöcke zusammenfassen. So ist es eine Möglichkeit, dass die Komponenten 402 bis 406 Funktionen des Lastmanagements 401 darstellen, wobei das Lastmanagement 401 auf mindestens einer physikalischen Komponente implementiert sein kann.

Zwischen dem Lastmanagement 401 und der Ladesteuerungseinrichtung 407 werden beispielsweise die folgenden Nachrichten übermittelt:

- eine Energieanfrage 408 von der Ladesteuerungseinrichtung 407 zu dem Sitzungs-Management 403;
- eine Sitzungsendemitteilung 409 von der Ladesteuerungseinrichtung 407 zu dem Sitzungs-Management 403;
- eine Sitzungsaktualisierungsnachricht 410 von der Ladesteuerungseinrichtung 407 zu der Sitzungskontrolle 404;
- eine Energieeinstellungsmitteilung 411 von dem Änderungsmanagement 405 zu der Ladesteuerungseinrichtung 407, in der die elektrische Energie pro Sitzung angegeben wird;
- eine Nachricht 412 zur Einstellung von Lastmanagementparametern, wobei die Nachricht 412 von der Ladesteuerungseinrichtung 407 an die Parametrisierung 406 übermittelt wird;
- eine Nachricht 413 zur Aktualisierung der Lastmanagementparameter, wobei die Nachricht 413 von der Parametrisierung 406 an die Ladesteuerungseinrichtung 407 übertragen wird.

Sitzungs-Management (Session Management)

Das Sitzungs-Management 403 verwaltet die aktiven Sitzungen mit ihrem jeweiligen aktuellen Zustand. Der aktuelle Zustand einer Sitzung wird von der Sitzungskontrolle 404 ermittelt.

Das Sitzungs-Management 403 erhält die Energieanfrage 408 sowie die Sitzungsendemitteilung 409 von der Ladesteuerungseinrichtung 407 und stößt basierend hierauf eine (Neu-)Berechnung der Lastverteilung in dem Lastmanagement-Verfahren 402 an.

Abhängig von einem aktuellen Zustand der Sitzung entscheidet das Sitzungs-Management 403 über die Einstellung des Ladestroms dieser Sitzung. Beispielsweise kann vereinbart sein, dass eine Sitzung, die über einen Steckertyp "Schuko-Stecker" geladen wird, nur einen konstanten Ladestrom erhalten soll. Insoweit weist das Sitzungs-Management 403 einer solchen Sitzung auch einen konstanten Ladestrom zu.

Sitzungskontrolle (Session Supervisor)

Jede Sitzung wird beispielsweise von einer Instanz einer Sitzungskontrolle 404 überwacht und erhält von der Ladesteuerungseinrichtung 407 anhand der Sitzungsaktualisierungsnachricht 410 einen aktuellen Status.

Vorzugsweise können von der Sitzungskontrolle 404 ungenutzte, z.B. freigewordene oder freiwerdende Ressourcen genutzt bzw. (erneut) verwendet (wieder zugewiesen) werden.

Beispielsweise wird hierfür mittels eines Parameters $I^{IST}$ ein IST-Strom über die Sitzungsaktualisierungsnachricht 410 an das Lastmanagement 401 übergeben. Anhand des Parameters $I^{IST}$ kann bestimmt werden, ob die für ein Elektro-Fahrzeug bereitgestellte elektrische Energie auch von diesem Elektro-Fahrzeug (oder der Ladestation für dieses Elektro-Fahrzeug) abgerufen wird. Falls nicht die ganze bereitgestellte elektrische Energie abgerufen wird, kann der Rest z.B. auf andere Ladestationen verteilt werden. Somit ist es möglich, ungenutzte Ressourcen effizient und zeitnah zu verwenden und somit die Effizienz der Ladevorgänge zu steigern.

Der aktuelle Strommesswert einer Sitzung kann von der Ladestation an die Ladesteuerungseinrichtung 407 und von dort an das Lastmanagement 401 übermittelt werden. Weiterhin ist es möglich, dass die Ladestation den Strom einstellt, mit dem das Elektro-Fahrzeug geladen werden soll bzw. dem Elektro-Fahrzeug einen Ladenstrom mitteilt, welcher nicht überschritten werden darf. Dieser Strom kann von der Ladesteuerungseinrichtung 407 begrenzt werden. Der aktuell der Ladestation bereitgestellte Strom kann somit von der Ladesteuerungseinrichtung 407 dem Lastmanagement 401 explizit in absoluten Werten und/oder in Form von Änderungen, z.B. in Einheiten von 0,5A, vorgegeben werden.

Liegt das Maximum der gemeldeten Werte für ein vorgegebenes Zeitintervall unterhalb eines vorgegebenen maximal bereitgestellten Ladestroms $I^{TARGET}$, so wird das gemessene Maximum des Ladestroms (oder alternativ ein hiervon abgeleiteter Wert, z.B. 110% des maximal gemessenen Ladestroms) als weitere Begrenzung für die Sitzung herangezogen. Daraufhin wird eine neue Lastverteilung ermittelt, bei der der frei nutzbare Anteil des Ladestroms

$$I^{\Delta} = I^{TARGET} - I^{IST},$$

anderen Sitzungen zur Verfügung gestellt werden kann.

Mit anderen Worten wird ermittelt, welcher Strom $I^\Delta$ aktuell von einem Elektro-Fahrzeug oder der zugeordneten Ladestation nicht genutzt wird und somit anderen Ladevorgängen (anderen Sitzungen) zugewiesen werden kann. Hierbei kann der Ladestrom $I^{IST}$ dem Maximum des über eine vorgegebene Anzahl von Zeitintervallen gemessenen Ladestroms entsprechen. Zusätzlich kann der Ladestrom $I^{IST}$ eine Sicherheitsmarge enthalten: So kann der Ladestrom $I^{IST}$ z.B. 110% des maximal gemessenen Ladestroms betragen. Damit könnte eine geringfügige Schwankung des angeforderten Ladestroms kompensiert werden, ohne dass hierfür eine neue Lastverteilung der Ressourcen (d.h. des Stroms) auf die Sitzungen notwendig würde.

Die Häufigkeit der Umverteilungen kann z.B. mittels eines Parameters $\Delta^{MIN}$ auf ein (vorgegebenes) Maß begrenzt werden: Falls die Differenz aus dem Sollwert $I^{TARGET}$ und dem Maximum der zu Zeiten $t_1$, $t_2$,..., $t_n$ gemeldeten Werte größer als der Parameter $\Delta^{MIN}$ ist, d.h.

$$I^{TARGET} - MAX \{ I^{IST}(t_1), I^{IST}(t_2),\ldots, I^{IST}(t_n) \} > \Delta^{MIN},$$

wird eine Umverteilung vorgenommen.

Da der von einem Elektro-Fahrzeug über die Ladestation benötigte Ladestrom über die Zeit variieren kann, kann die Begrenzung des Ladestroms nach einer vorgegeben Zeitdauer wieder aufgehoben werden. Dann kann das Maximum des Ladestroms erneut bestimmt und ggf. ein anderer Ladestrom diesem Elektro-Fahrzeug bereitgestellt werden. Die vorgegebene Zeitdauer kann z.B. mittels eines Parameters, der angibt, wann eine erneute Bestimmung des Ladestroms anfällt, angegeben werden.

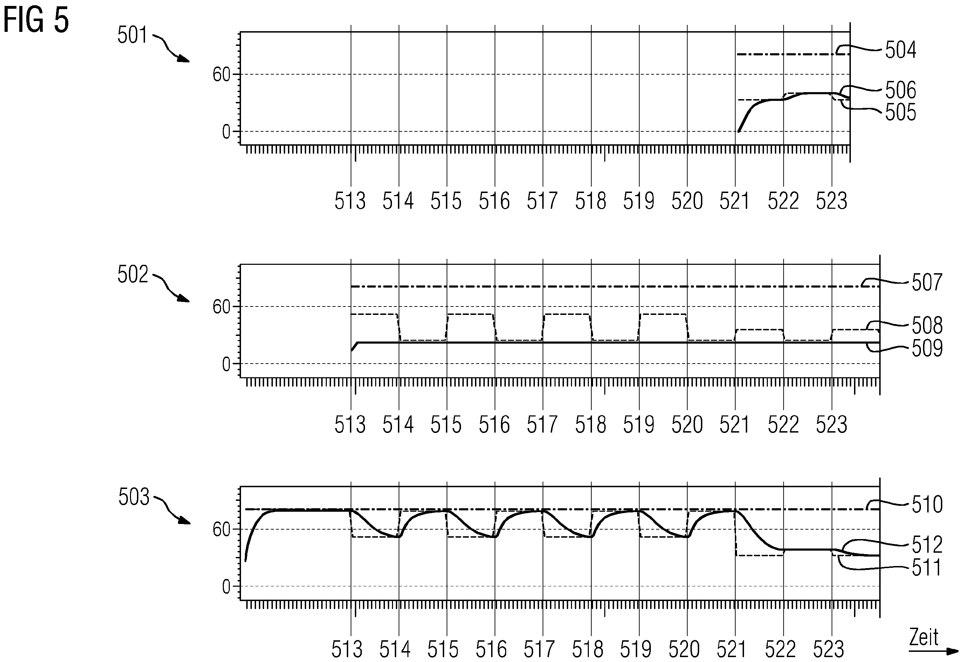

Fig.5 zeigt drei Sitzungen 501 bis 503, wobei jede Sitzung beispielsweise einen Ladevorgang für ein Elektro-Fahrzeug betrifft. Pro Sitzung 501 bis 503 sind dargestellt:

- je ein maximaler Ladestrom 504, 507 und 510;
- je ein angefragter Ladestrom 505, 508 und 511;
- je ein tatsächlicher Ladestrom 506, 509 und 512.

In dem gezeigten Beispiel steht insgesamt ein Ladestrom von 100A zur Verfügung, der geeignet zwischen den Sitzungen 501 bis 503 aufgeteilt werden soll. Der maximale Ladestrom 504, 507 und 510 beträgt für alle Sitzungen 501 bis 503 80A.

Beispielsweise wird bis zu einem Zeitpunkt 513 von der Sitzung 503 der angefragte Ladestrom 511 von 80A auf 50A reduziert, zu einem Zeitpunkt 514 wird der angefragte Ladestrom 511 wieder von 50A auf 80A erhöht. Dieser Wechsel zwischen 80A und 50A setzt sich für den angefragten Ladestrom 511 bis zu einem Zeitpunkt 520 fort, zu einem Zeitpunkt 521 wird der angefragte Ladestrom 511 auf 35A reduziert, zu einem Zeitpunkt 522 wird der angefragte Ladestrom 511 auf 40A erhöht und zu einem Zeitpunkt 523 wieder auf 35A reduziert. Der tatsächliche Ladestrom 512 folgt beispielhaft dem angefragten Ladestrom 511.

Die Sitzung 502 fordert zu dem Zeitpunkt 513 einen Ladestrom 508 von 50A und zu dem Zeitpunkt 514 einen Ladestrom 508 von 20A. Dieser Wechsel setzt sich über die Zeitpunkte 515 bis 520 fort. Zu dem Zeitpunkt 521 wird der angeforderte Ladestrom 508 auf 35A erhöht, zu dem Zeitpunkt 522 auf 20A reduziert und zu dem Zeitpunkt 523 wieder auf 35A erhöht.

Schließlich beträgt der von der Sitzung 501 angeforderte Ladestrom 505 zu dem Zeitpunkt 521 35A, zu dem Zeitpunkt 522 40A und zu dem Zeitpunkt 523 wieder 35A.

Der tatsächliche Ladestrom 509 für die Sitzung 502 beträgt durchgehend 20A. Der tatsächliche Ladestrom 506 für die Sitzung 501 folgt dem angefragten Ladestrom. Somit ist sichergestellt, dass in Summe nicht mehr als 100A bereitgestellt werden müssen.

Fig.5 zeigt somit beispielhaft, dass freiwerdende Ressourcen für andere Sitzungen verwendet werden können. So wird ab dem Zeitpunkt 516 der Ladestrom der Sitzung 502 um 30A reduziert. Dieser Ladestrom kann der Sitzung 503 zugewiesen werden, die zu dem Zeitpunkt 516 somit einen Ladestrom von 80A erhält (der ansonsten nicht bereitgestellt werden könnte).

Änderungsmanagement für das Lastmanagement (Lastmanagement Rollout)

Dem Änderungsmanagement 405 wird eine neue Lastverteilung über die Ladesteuerungseinrichtung 407 mitgeteilt. Wenn Änderungen sofort umgesetzt werden, kann es zu kurzfristigen Lastspitzen (Peaks) kommen, die für das Stromnetz unerwünscht sind.

Es wird daher vorgeschlagen, die neue Lastverteilung schrittweise umzusetzen bzw. einzustellen. Beispielsweise wird eine Änderung auf einen vorgegebenen Ladestrom nicht für mehrere Sitzungen auf einmal und/oder nicht vollständig sondern schrittweise durchgeführt, z.B. wird im Falle einer Reduktion des Ladestroms dem Verbraucher (z.B. Elektro-Fahrzeug) eine vorgegebene Zeitdauer eingeräumt, den Ladestrom auf den reduzierten Wert einzustellen.

Beispielsweise kann diese vorgegebene Zeitdauer von der Ladestation, die mit der Ladesteuerungseinrichtung 407 verbunden ist, eingestellt werden. Wird nach Verstreichen dieser vorgegebenen Zeitdauer der neue reduzierte Ladestrom nicht erreicht, kann beispielsweise die Ladestation (z.B. für einen bestimmte Dauer) abgeschaltet werden.

Somit ist es möglich, ungewollte Lastspitzen des Ladestroms wirksam zu vermeiden, indem z.B. nicht alle Werte der neuen Lastverteilung zur gleichen Zeit als neue Sollwerte den betroffenen Ladestationen mitgeteilt werden. Stattdessen werden die Werte der neuen Lastverteilung beispielsweise zueinander zeitlich verzögert den Ladestationen mitgeteilt.

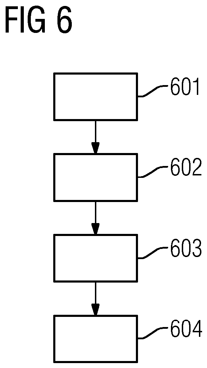

Fig.6 zeigt eine schematische Darstellung mit Schritten zur Veranschaulichung des Änderungsmanagements für das Lastmanagement.

Beispielsweise werden in einem Schritt 601 nur den Ladestationen Werte übermittelt, für die der neue Ladestrom gegenüber dem vorherigen Ladestrom reduziert wurde.

In einem Schritt 602 kann geprüft werden, ob die Reduktion des Ladestroms von den Ladestationen eingehalten wird. Dies kann erreicht werden, indem der tatsächlich entnommene Ladestrom ($I^{IST}$), der von der Sitzungskontrolle 404 bereitgestellt wird, überwacht wird.

Nun kann in einem Schritt 603 das Änderungsmanagement 405 für das Lastmanagement prüfen, ob der aktuelle Strommesswert (aktuell entnommener Strom) kleiner oder gleich dem neues Sollwert $I^{TARGET}$ ist, d.h.

$$I^{IST} \leq I^{TARGET}.$$

In diesem Fall gilt die Änderung des Ladestroms als erfüllt. Nun kann in einem Schritt 604 der Ladestrom für die anderen Ladestationen angehoben werden. So wird sichergestellt, dass eine Reduktion einer Anhebung voraus geht, was eine Lastspitze wirksam verhindert.

Vorzugsweise werden die schrittweisen Anpassungen der Ladeströme entsprechend der neuen Lastverteilung so vorgenommen, dass diese nicht von dem Lastmanagement-Verfahren 402 als Anlass für die Bestimmung einer geänderten Lastverteilung interpretiert werden (solange die neue Lastverteilung noch nicht vollständig umgesetzt wurde). Dies kann z.B. dadurch erreicht werden, dass die Umstellung auf die neue Lastverteilung deutlich schneller durchgeführt wird als die Zyklen der Berechnung einer Lastverteilung durch das Lastmanagement-Verfahren 402 sind. Dann besteht keine oder eine vernachlässigbare Aussicht dafür, dass das Lastmanagement-Verfahren 402 eine Lastverteilung berechnet bevor die neue Lastverteilung umgesetzt wurde. Eine Variante besteht darin, dass bis zur vollständigen Umsetzung der neuen Lastverteilung durch das Änderungsmanagement 405 ausgeschlossen wird, dass erneut eine Lastverteilung durch das Lastmanagement-Verfahren 402 bestimmt wird. So kann z.B. vorgesehen werden, dass erst dann eine weitere Lastverteilung berechnet wird, wenn dies von dem Änderungsmanagement 405 z.B. mittels einer Nachricht an die Sitzungskontrolle 404, das Sitzungsmanagement 403 und/oder an das Lastmanagement-Verfahren 402 angezeigt wird. Beispielsweise kann in der jeweiligen Einheit 404, 403 oder 402 hierzu eine Markierung (Flag) aktiv oder inaktiv sein, die andeutet, dass die aktuelle Lastverteilung noch nicht vollständig umgesetzt wurde.

Parametrisierung

Die Parametrisierung 406 verwaltet Parameter für das Lastmanagement 401. Insbesondere kann die Parametrisierung 406 Parameter für das Lastmanagement-Verfahren 402 setzen.

Zusätzlich kann von der Parametrisierung 406 sichergestellt werden, dass Parameter mit einer zeitlichen Abhängigkeit (z.B. für ein gegebenes Gesamtlastprofil) zu dem entsprechenden Zeitpunkt aktualisiert werden.

Lastmanagement-Verfahren

Nachfolgend wird erläutert, wie die Lastverteilung bestimmt werden kann. Beispielsweise kann zumindest ein Teil dieser Berechnung in dem Lastmanagement-Verfahren 402 implementiert werden.

So wird eine effiziente und/oder faire Lastverteilung erreicht, wobei insbesondere verschiedene Randbedingungen eingehalten werden können. Als Randbedingungen wird beispielsweise mindestens eine der folgenden Maßgaben berücksichtigt:

- jede Ladesession kann durch eine ID (auch bezeichnet als Identifikation oder Kennung), eine Ladeeinrichtung (z.B. einer Ladestation) und z.B. anhand einer Vertragsart eines Nutzers oder eines zu ladenden Fahrzeugs einer Gruppe oder mehreren Gruppen zugeordnet werden;

- für eine Gruppe kann eine Kapazität, z.B. eine Ladekapazität, vorgegeben oder auf andere Art bestimmt sein;
- eine Begrenzung eines Ladestroms kann für einen Ladevorgang oder für jeden Ladevorgang vorgegeben werden;
- jeder Ladevorgang kann beispielsweise mit einem Basis-Ladestrom oder einem Mindest-Ladestrom versorgt werden;
- für jeden Ladevorgang kann ein Gewichtungsfaktor im Hinblick auf eine Priorisierung des Ladevorgangs bestimmt werden.

Eine Ortsnetzstation verfügt beispielsweise über eine Vielzahl von Abgängen zum Niederspannungsnetz mit einer Vielzahl von Anschlusspunkten, über die beispielsweise ein Ladevorgang eines Fahrzeugs mittels einer Ladestation erfolgen kann. Eine Ortsnetzstation ist über (mindestens) einen Transformator mit einem Energienetz auf der Mittelspannungsebene verbunden. Der Transformator stellt eine vorgegebene maximale Ladekapazität bereit. Diese maximale Ladekapazität soll durch die Anschlusspunkte eingehalten werden. Weiterhin kann das Energienetz über den Transformator unterschiedliche Stromarten, z.B. einen günstigen Strom und einen ökologisch gewonnenen Strom (nachfolgend bezeichnet als "ökologischer Strom"), bereitstellen. Die Stromarten können mit unterschiedlichen Preisen verknüpft sein. Beispielsweise kann es eine Maßgabe eines Kunden sein, dass der Ladevorgang zu x% (mit x=0...100) mit ökologischem Strom erfolgen soll. Dies kann z.B. vertraglich geregelt sein und bei dem Ladevorgang entsprechend berücksichtigt werden. Auch ist es möglich, diese Maßgabe als Wunsch zu behandeln und, sofern der Wunsch nicht erfüllt werden kann, auf eine Alternative (hier z.B. den günstigen Strom) auszuweichen. Insoweit kann ein Kunde beispielsweise einer Gruppe zugeordnet sein, die ausschließlich oder vorzugsweise Ladevorgänge mit ökologischem Strom durchführt (die Vertragsart kann mit der Gruppenzugehörigkeit verknüpft sein).

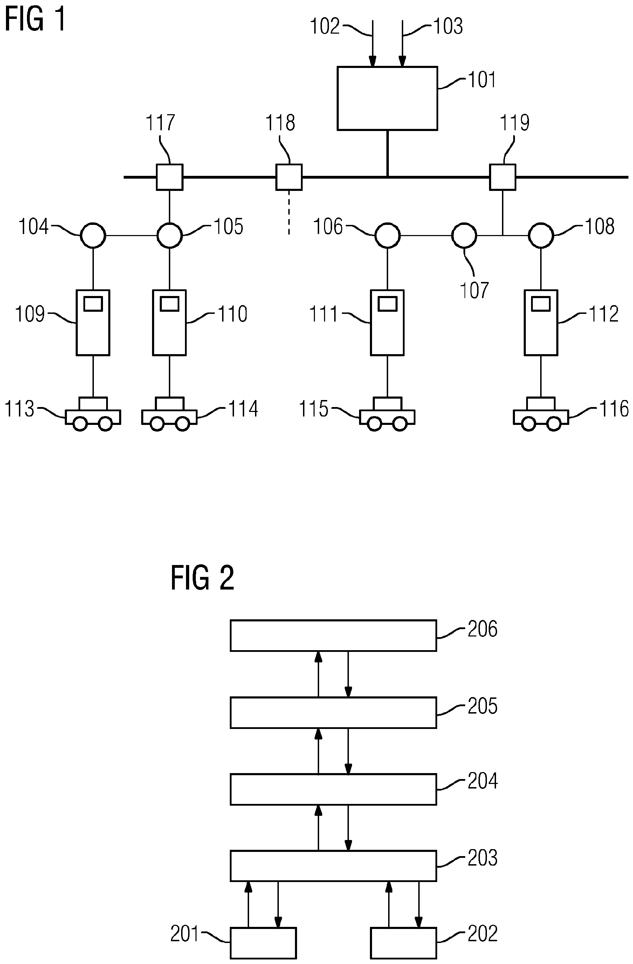

Fig.1 zeigt einen Transformator 101, der von einem Energienetz mit ökologischem Strom 102 und mit günstigem Strom 103 versorgt werden kann. Der Transformator 101 ist beispielsweise Teil einer Ortsnetzstation.

Der Transformator 101 ist über eine Leitung mit drei Abgängen 117, 118 und 119 verbunden. Der Abgang 117 ist über einen Anschlusspunkt 104 mit einer Ladestation 109 verbunden, an der ein Elektro-Fahrzeug 113 geladen wird. Der Abgang 117 ist weiterhin über einen Anschlusspunkt 105 mit einer Ladestation 110 verbunden, an der ein Elektro-Fahrzeug 114 geladen wird. Beispielhaft ist ferner der Abgang 119 mit den Anschlusspunkten 106 bis 108 verbunden, wobei der Anschlusspunkt 106 mit einer Ladestation 111 verbunden ist, an der ein Elektro-Fahrzeug 115 geladen wird und wobei der Anschlusspunkt 108 mit einer Ladestation 112 verbunden ist, an der ein Elektro-Fahrzeug 116 geladen wird.

Beispielsweise stellt sowohl der Transformator 101 in der Ortsnetzstation als auch jeder der Abgänge 117 bis 119 eine maximale Kapazität bereit, die nicht überschritten werden darf.

In einem (zentralen oder dezentralen) Ladesystem wird für jeden Ladevorgang eine Kennung (ID) verwaltet. Der Ladevorgang für ein Elektro-Fahrzeug weist ferner einen maximal zulässigen Ladestrom $I^{MAX}$ auf. Dieser maximal zulässige Ladestrom ergibt sich z.B. als ein Minimum der den Ladevorgang begrenzenden Größen: Beispielsweise ist der maximale Ladestrom begrenzt durch

- eine maximal zulässige Ladekapazität des Kabels zwischen dem Elektro-Fahrzeug und der Ladestation,
- eine maximal zulässige Ladekapazität der Ladestation,
- eine maximal zulässige Ladekapazität des Kabels zwischen der Ladestation und dem Abgang.

Die kleinste der maximal zulässigen Ladekapazitäten (anschaulich: das schwächste Glied der Kette) ist ausschlaggebend für den maximal zulässigen Ladestrom $I^{MAX}$.

Vorzugsweise wird ein (zeitlich begrenzter) Ladevorgang genau einem Vertrag zugeordnet. Der Vertrag gibt an, ob z.B. ökologischer Strom oder günstiger Strom verwendet werden soll. Auch Mischformen aus Stromarten sind möglich. Ergänzend sei darauf hingewiesen, dass in dem Beispiel der Anschaulichkeit halber nur zwei Stromarten unterschieden werden. Entsprechend sind viele unterschiedliche Stromarten, z.B. von unterschiedlichen Anbietern, ggf. mit unterschiedlichen Preisen, möglich. Mit einem Vertrag kann ein Kontingent in Bezug auf die maximal zulässige Ladekapazität verknüpft sein.

Das Ladesystem kann ein Profil pro Gruppe und Tag erhalten, beispielsweise können eine Vielzahl von Werten pro Zeiteinheit (z.B. 96 Viertelstundenwerte pro Tag) bereitgestellt oder vorgegeben werden.

Nachfolgend wird im Hinblick auf Fig.1 ein Beispiel dargestellt:
Das Elektro-Fahrzeug 113 erhält eine Kennung ID1 für den Ladevorgang, das Elektro-Fahrzeug 114 erhält eine Kennung ID2 für den Ladevorgang, das Elektro-Fahrzeug 115 erhält eine Kennung ID3 für den Ladevorgang und das Elektro-Fahrzeug 116 erhält eine Kennung ID4 für den Ladevorgang. Die Elektro-Fahrzeuge 113 und 115 mit den Kennungen ID1 und ID3 sollen mit ökologischem Strom 102 und die Elektro-Fahrzeuge 114 und 116 mit den Kennungen ID2 und ID4 mit günstigem Strom 103 geladen werden.

Es ergeben sich somit beispielhaft die folgenden Gruppen:

- Gruppe G$_{ök}$, die mit ökologischem Strom geladen wird/werden soll:
  G$_{ök}$ = {1, 3};
- Gruppe G$_{günst}$, die mit günstigem Strom geladen wird/werden soll:
  G$_{günst}$ = {2, 4};
- Gruppe G$_{Abg1}$, die an dem Abgang 117 geladen wird/werden soll:
  G$_{Abg1}$ = {1, 2};
- Gruppe G$_{Abg2}$, die an dem Abgang 118 geladen wird/werden soll:
  G$_{Abg2}$ = { };
- Gruppe G$_{Abg3}$, die an dem Abgang 119 geladen wird/werden soll:
  G$_{Abg3}$ = {3, 4} ;
- Gruppe G$_{Trafo}$, die an dem Transformator geladen wird/werden soll:
  G$_{Trafo}$ = {1, 2, 3, 4}.

In den geschweiften Klammern {...} sind die Kennungen der für die jeweilige Gruppe betroffenen Elektro-Fahrzeuge 113 bis 116 enthalten. Alternativ ist es ebenso möglich, die Kennungen ID1 bis ID4 als Kennungen für die Ladevorgänge zu bezeichnen.

Jede Gruppe oder eine Auswahl der Gruppen hat beispielsweise eine Kapazitätsbeschränkung C$_{Gruppe}$.

Nachfolgend wird beispielhaft ein zentrales oder auch dezentrales (siehe dazu weiter unten) Ladesystem (auch bezeichnet als "Lastmanagement") unter Berücksichtigung z.B. einer entsprechenden Lastverteilung beschrieben. Die Lastverteilung erfolgt vorzugsweise unter Berücksichtigung vorgegebener Nebenbedingungen. Das Ladesystem ermittelt beispielsweise einen Parameter I$^{Target}$, der die maximale Leistungsaufnahme (Strom) pro Ladevorgang bzw. Ladestation bestimmt. Das Ladesystem kann beispielsweise gemäß oder basierend auf der Norm IEC 61851 betrieben werden.

Beispielhaft kann das Ladesystem eine Schnittstelle umfassen, das die folgenden Funktionen (z.B. realisiert als Funktionsaufrufe) bereitstellt:

- energyRequest() : Mitteilung an das Lastmanagement über einen weiteren (neuen) Ladevorgang;
- sessionEnd() : Ende eines Ladevorgangs;
- sessionUpdate() : Aktualisierung von Statuswerten eines Ladevorgangs;
- energySet() : Setzen des Parameters I$^{Target}$ als ein Sollwert durch das Ladesystem.

Hierbei sei erwähnt, dass der Ladevorgang auch als eine Sitzung (oder als eine "Session") bezeichnet werden kann.

Nachfolgend wird ein beispielhafter Ansatz erläutert, der über die Steuerung des Parameters I$^{Target}$ beispielsweise eine effiziente und faire Verteilung der Gesamtkapazität ermöglicht.

Faire Lastverteilung der Gesamtkapazität

In diesem Szenario ist eine Gesamtkapazität C vorgegeben. Weiterhin gibt es nur eine einzelne Gruppe und die Anzahl der Ladevorgänge n ist bekannt. Der Sollwert I$^{Target}$ für die Lastverteilung ergibt sich zu:

$$I^{\text{Target}} = \frac{C}{n}$$

Die Lastverteilung kann wie folgt durchgeführt werden:

(a) Eine Ladestation informiert das (zentrale) Ladesystem über eine Status-Änderung, z.B. mittels der vorstehend genannten Funktionen energyRequest(), sessionEnd(), sessionUpdate).

(b) In einem nächsten Schritt ermittelt das Ladesystem bei jeder Status-Änderung eine Lastverteilung und übermittelt diese an die Ladestation(en).

Faire gewichtete Lastverteilung

Auch in diesem Szenario ist die Gesamtkapazität C vorgegeben, es gibt nur eine einzelne Gruppe und die Anzahl der Ladevorgänge n ist bekannt. Für einen Ladevorgang $s \in S$ wird ein Gewichtungsfaktor $\omega_s$ für eine Priorisierung definiert. Die Lastverteilung kann in Form eines Vektors

$$I^{\text{Target}} = \left( I_s^{\text{Target}}, s \in S \right)$$

bestimmt werden.

Der Sollwert der Lastverteilung $I_s^{\text{Target}}$ pro Ladevorgang ergibt sich zu:

$$I_s^{\text{Target}} = \frac{w_s \cdot C}{\sum_{s \in S} w_s} \qquad \forall s \in S$$

Die Lastverteilung erfolgt analog den Schritten des vorstehend erläuterten Szenarios "Faire Lastverteilung der Gesamtkapazität".

Beispiel: Mit einer Gesamtkapazität C=100 und n=10 Ladevorgängen sowie einer Gewichtung der 10 Ladevorgänge gemäß dem folgenden Vektor w folgt daraus der Lastverteilungsvektor $I^{\text{Target}}$:

$$w = \begin{bmatrix} 3 \\ 1 \\ 3 \\ 2 \\ 3 \\ 2 \\ 3 \\ 2 \\ 1 \\ 1 \end{bmatrix} \quad \Rightarrow \quad I^{\text{Target}} = \begin{bmatrix} 14,2857 \\ 4,7619 \\ 14,2857 \\ 9,5238 \\ 14,2857 \\ 9,5238 \\ 14,2857 \\ 9,5238 \\ 4,7619 \\ 4,7619 \end{bmatrix}$$

Faire Lastverteilung mit zwei Nebenbedingungen

Auch in diesem Szenario ist die Gesamtkapazität C vorgegeben, es gibt nur eine einzelne Gruppe und die Anzahl der Ladevorgänge n ist bekannt. Der Ladestrom kann für jeden Ladevorgang s einzeln auf einen maximalen Ladestrom $I^{\text{MAX}}$ begrenzt sein:

$$I^{\text{MAX}} = \left( I_s^{\text{MAX}}, s \in S \right)$$

Die Lastverteilung kann beispielsweise mittels eines sogenannten "Max-Min Flow Control"-Verfahrens erfolgen (vgl.: D. Bertsekas, R. Gallager: "Data Networks", 2nd Edition, Prentice-Hall, 1992, Seiten 527, 528).

Beispiel: Mit einer Gesamtkapazität C=100 und n=10 Ladevorgängen sowie einer Begrenzung des Ladestroms pro Ladevorgang ergibt sich daraus ein Lastverteilungsvektor $I^{\text{Target}}$ zu:

$$I^{\text{MAX}} = \begin{bmatrix} 6 \\ 6 \\ 2 \\ 2 \\ 17 \\ 5 \\ 22 \\ 5 \\ 5 \\ 25 \end{bmatrix} \quad \Rightarrow \quad I^{\text{Target}} = \begin{bmatrix} 6 \\ 6 \\ 2 \\ 2 \\ 17 \\ 5 \\ 22 \\ 5 \\ 5 \\ 25 \end{bmatrix}$$

Faire gewichtete und proportionale Lastverteilung

Jeder Ladevorgang kann durch eine Kennung der Ladestation und durch eine Vertragsart verschiedenen Gruppen zugeordnet werden. Für jede Gruppe kann eine maximale Kapazität $C_{\text{GrappeID}}$ definiert werden. Für jeden Ladevorgang kann der Ladestrom gemäß der Beziehung

$$I^{\text{MAX}} = \left( I_s^{\text{MAX}}, s \in S \right)$$

begrenzt werden. Weiterhin kann bestimmt sein, dass jede Ladestation wenigstens einen Basis-Strom $I^{\text{Basis}}$ erhält. Für einen Ladevorgang $s \in S$ wird ein Gewichtungsfaktor $\omega_s$ für eine Priorisierung definiert.

Damit ergibt sich das folgende Maximierungsproblem:

$$\max \sum_{s \in S} w_s \log(I_s^{\text{Target}}),$$

mit den Nebenbedingungen:

$$R \cdot I^{\text{Target}} \leq C,$$

$$I_s^{\text{Target}} \geq I^{\text{Basis}},$$

wobei R eine Matrix mit den Ladevorgängen und deren Kapazitätsbegrenzungen, C ein Vektor mit allen Kapazitätsbegrenzungen und $I^{\text{Target}}$ den Lastverteilungsvektor darstellt.

Anstatt der Logarithmus-Funktion kann eine beliebige konkave Funktion verwendet werden.

Beispiel: Basierend auf dem in Fig.1 gezeigten Beispiel seien zu den dargestellten vier Ladevorgängen noch sechs weitere Ladevorgänge gegeben. In Summe ergeben sich somit n=10 Ladevorgänge. Zusätzlich sind die folgenden maximalen Kapazitäten vorgegeben:

- für den ökologischen Strom: $C_{\text{ök}} = 45$;
- für den günstigen Strom: $C_{\text{günst}} = 200$;
- für den Transformator $C_{\text{Trafo}} = 100$;
- für den Abgang 117: $C_{\text{Abg1}} = 40$;
- für den Abgang 118: $C_{\text{Abg2}} = 100$;
- für den Abgang 119: $C_{\text{Abg3}} = 100$;

Für die Ladevorgänge 1 bis 10 werden die folgenden maximalen Ladeströme vorgegeben:

$$I^{\text{MAX}} = \begin{bmatrix} 100 \\ 10 \\ 10 \\ 100 \\ 10 \\ 10 \\ 100 \\ 100 \\ 10 \\ 10 \end{bmatrix}$$

Als Mindeststrom pro Ladevorgang sei $I^{\text{Basis}}=6$ vorgegeben.

Hieraus folgt die Matrix R zu:

$$
R = \begin{bmatrix} \text{Einheitsmatrix, Dimension n} \\ R_{\text{Abg1}} \\ R_{\text{Abg2}} \\ R_{\text{Abg3}} \\ R_{\text{Trafo}} \\ R_{\text{ök}} \\ R_{\text{günst}} \end{bmatrix} = \begin{bmatrix} 1 & 0 & 0 & 0 & 0 & 0 & 0 & 0 & 0 & 0 \\ 0 & 1 & 0 & 0 & 0 & 0 & 0 & 0 & 0 & 0 \\ 0 & 0 & 1 & 0 & 0 & 0 & 0 & 0 & 0 & 0 \\ 0 & 0 & 0 & 1 & 0 & 0 & 0 & 0 & 0 & 0 \\ 0 & 0 & 0 & 0 & 1 & 0 & 0 & 0 & 0 & 0 \\ 0 & 0 & 0 & 0 & 0 & 1 & 0 & 0 & 0 & 0 \\ 0 & 0 & 0 & 0 & 0 & 0 & 1 & 0 & 0 & 0 \\ 0 & 0 & 0 & 0 & 0 & 0 & 0 & 1 & 0 & 0 \\ 0 & 0 & 0 & 0 & 0 & 0 & 0 & 0 & 1 & 0 \\ 0 & 0 & 0 & 0 & 0 & 0 & 0 & 0 & 0 & 1 \\ 1 & 1 & 1 & 1 & 1 & 0 & 0 & 0 & 0 & 0 \\ 0 & 0 & 0 & 0 & 0 & 0 & 0 & 0 & 0 & 0 \\ 0 & 0 & 0 & 0 & 0 & 1 & 1 & 1 & 1 & 1 \\ 1 & 1 & 1 & 1 & 1 & 1 & 1 & 1 & 1 & 1 \\ 1 & 0 & 1 & 0 & 1 & 0 & 1 & 0 & 1 & 0 \\ 0 & 1 & 0 & 1 & 0 & 1 & 0 & 1 & 0 & 1 \end{bmatrix}
$$

wobei die Spalten der Matrix R die Ladevorgänge 1 bis 10 kennzeichnen. Der Vektor $R_{\text{Abg1}}$ gibt an, dass die Ladevorgänge 1 bis 5 von dem Abgang 117 versorgt werden, der Vektor $R_{\text{Abg3}}$ gibt an, dass die Ladevorgänge 6 bis 10 von dem Abgang 119 versorgt werden. Der Abgang 118 versorgt in diesem Beispiel keinen Ladevorgang. Der Vektor $R_{\text{Trafo}}$ gibt an, dass der Transformator 101 alle Ladevorgänge 1 bis 10 versorgt. Der Vektor $R_{\text{ök}}$ gibt an, dass die Ladevorgänge 1, 3, 5, 7 und 9 mit ökologischem Strom durchgeführt werden und der Vektor $R_{\text{günst}}$ gibt an, dass die Ladevorgänge 2, 4, 6, 8 und 10 mit günstigem Strom durchgeführt werden.

Der Vektor C ergibt sich zu:

$$
C^T = \begin{bmatrix} I^{\text{MAX}} \\ C_{\text{Abg1}} \\ C_{\text{Abg2}} \\ C_{\text{Abg3}} \\ C_{\text{Trafo}} \\ C_{\text{ök}} \\ C_{\text{günst}} \end{bmatrix} = \begin{bmatrix} 100 \\ 10 \\ 10 \\ 100 \\ 10 \\ 10 \\ 100 \\ 100 \\ 10 \\ 10 \\ 40 \\ 100 \\ 100 \\ 100 \\ 45 \\ 200 \end{bmatrix}
$$

Hieraus folgt für den Lastverteilungsvektor:

$$I^{\text{Target}} = \begin{bmatrix} 7,4424 \\ 8,8365 \\ 7,4424 \\ 8,8365 \\ 7,4424 \\ 10,0000 \\ 12,6729 \\ 17,3271 \\ 10,0000 \\ 10,0000 \end{bmatrix}$$

In diesem Beispiel sind die limitierenden Nebenbedingungen die maximal zulässigen Ströme für die Ladevorgänge 6, 9 und 10, die maximal zulässige Kapazität des Abgangs 117 ($C_{\text{Abg1}}$ = 40), die maximal zulässige Kapazität des Transformators 101 ($C_{\text{Trafo}}$ = 100) sowie der maximal zulässige (oder mögliche) ökologische Strom ($C_{\text{ök}}$ = 45).

Ferner ist es auch möglich, dass die einzelnen Ladevorgänge zusätzlich eine Priorisierung mittels des Gewichtungsfaktors $\omega_s$ erhalten. Diese Priorisierung kann zusätzlich zu den oben genannten Vorgaben bei der Bestimmung des Lastverteilungsvektors berücksichtigt werden:

$$w = \begin{bmatrix} 1 \\ 2 \\ 3 \\ 4 \\ 5 \\ 6 \\ 7 \\ 8 \\ 9 \\ 10 \end{bmatrix} \Rightarrow I^{\text{Target}} = \begin{bmatrix} 6,0000 \\ 6,0000 \\ 6,0000 \\ 9,6675 \\ 9,5824 \\ 10,0000 \\ 13,4176 \\ 19,3325 \\ 10,0000 \\ 10,0000 \end{bmatrix}$$

Ein Vorteil des hier vorgestellten Ansatzes besteht darin, dass ein maximaler Ladestrom für mehrere Ladevorgänge, z.B. für mehrere Ladestationen und/oder Elektro-Fahrzeuge, zentral oder dezentral koordiniert werden kann unter Einhaltung vorgegebener vielseitig einstellbarer Nebenbedingungen. Die Nebenbedingungen können wirtschaftliche Vorgaben und/oder technische Vorgaben umfassen.

Beispiel: Dezentrales Lastmanagement

Das dezentrale Lastmanagement kann auf verschiedene Arten erfolgen. Nachfolgend werden beispielhaft zwei Möglichkeiten erläutert.

(1) Wahl eines Masters:

Hierbei können die Ladestationen oder die Ladevorgänge, die z.B. in einer Komponente ablauffähige Funktionen sind, einen Master auswählen, der die Lastverteilung ermittelt. Nachfolgend wird beispielhaft angenommen, dass mehrere Ladestationen als Peers (kommunizierende Komponenten oder Funktionen) agieren und sich selbst organisieren. Dieser Ansatz ist ebenso möglich für Funktionen (z.B. Ladevorgänge), die auf einer oder mehreren Komponenten ablauffähig sind.

Fällt der Master aus, erkennen dies die anderen Ladestationen, es wird ein neuer Master bestimmt. Dieser Ansatz hat den Vorteil, dass das Lastmanagement nicht für den dezentralen Ansatz angepasst werden muss, sondern ohne Änderungen aus dem zentralen Lastmanagement übernommen werden kann. Die Komplexität, welche durch eine dezentrale Umsetzung entsteht, liegt außerhalb der Lastmanagementkomponente und kann von anderen Komponenten bereitgestellt werden.

(2) Kommunikation ohne Master (auch bezeichnet als "Gossiping-Verfahren"):

Hierbei wird eine Koordinierung ohne eine zentrale Instanz durchgeführt. Die Ladestationen bilden ein Peerto-Peer (P2P)-Netz und kommunizieren mit anderen Ladestationen (Peers), die z.B. zufällig (oder pseudozufällig) oder nach einem vorgegebenen Schema ausgewählt werden.

Hierbei können verschiedene Schätzwerte ermittelt werden, z.B. über den derzeitigen Gesamtverbrauch im P2P-Netz. Basierend auf diesen Schätzwerten entscheidet eine Lastmanagement-Komponente der Ladestation autonom über den vorzugebenden Ladestrom $I^{Target}$. Bei dem Gossiping-Verfahren wird das Lastmanagement verteilt (z.B. mittels eines verteilten Algorithmus) durchgeführt. Dieser Schritt muss für jeden Algorithmus erneut durchgeführt werden.

Das Gossiping-Verfahren eignet sich für große Netze, bei denen eine zentrale Verarbeitung zu aufwändig ist bzw. allein die Koordination einer zentralen Verarbeitung zu einer hohen Verkehrslast führen würde.

Nachfolgend wird der Ansatz (1) "Wahl eines Masters" näher beschrieben. Vor allem für eine kleine Anzahl von Ladestationen (z.B. ca. 32) ist der Verarbeitungsaufwand für den Master unkritisch und beeinträchtigt nicht die Leistungsfähigkeit der Komponenten.

Hierbei ist es von Vorteil, dass ein deterministisches Lastmanagement erreicht werden kann, bei dem keine Schwankungen durch ein Konvergenzverhalten entstehen.

Beispiel für ein dezentrales Lastmanagement mit "Wahl eines Masters"

Fig.2 zeigt beispielhaft eine Architektur eines dezentralen Lastmanagements, das den Ansatz "Wahl eines Masters" ermöglicht bzw. unterstützt.

Vorzugsweise wird in den Ladestationen ein Programm eingesetzt, das den hier beschriebenen dezentralen Ansatz verfolgt. Beispielsweise kann ein und dasselbe Programm auf mehreren Ladestationen ablaufen, da so jede Ladestation (als Knoten eines P2P-Netzwerks) in der Lage ist, die Funktion des Masters zu übernehmen.

Das Programm kann unterschiedliche Kommunikationswege nutzen, z.B. drahtlose oder drahtgebundene Kommunikation. Beispielsweise können die Ladestationen über das Ethernet 201 und/oder über ein Mobilfunknetzwerk 202 (z.B. GSM, UMTS, LTE, etc.) mittels TCP/IP 203 miteinander kommunizieren.

In der Protokollarchitektur von Fig.2 ist oberhalb der TCP/IP-Schicht 203 ein Overlay-Netzwerk 204 dargestellt, das das logische Netz oberhalb des IP-Netzes verwaltet.

In einem P2P-Netzwerk können eine große Anzahl von Peers (hier im Beispiel: Ladestationen) mit signifikanter Dynamik (Änderungen über die Zeit) vorhanden sein. Das Overlay-Netzwerk 204 kann mittels verteilter Hashtabellen (sogenannte: "Distributed Hash Tables") strukturiert sein. In dem hier beschriebenen Beispiel kann eine Verwaltung des Overlay-Netzwerks 204 in einer Konfigurationsphase (auch bezeichnet als Engineeringphase oder Parametrierung) von einer zentralen Komponente unterstützt werden, d.h. jeder Peer (Ladestation) des P2P-Netzwerks erhält eine vollständige Liste aller Peers (Ladestationen) bei dessen Konfiguration.

Basierend auf der Liste aller Peers erfolgt die Wahl des Masters 205 in jeder der Ladestationen. In einem ersten Schritt wird die Annahme getroffen, dass die Listen der Peers konsistent sind. Bei inkonsistenten Peer-Listen werden diese synchronisiert. Der Master wird anhand einer von der zentralen Instanz vergebenen Peer-ID ausgewählt. Beispielsweise wird diejenige Ladestation als Master gewählt, die die kleinste Peer-ID aufweist.

Falls eine Ladestation sich selbst als Master bestimmt hat, aktiviert sie einen Master-Modus und initialisiert ein Lastmanagement 206, z.B. durch Aktivierung eines Lastmanagement-Algorithmus. Die hierfür notwendigen Parameter können durch die zentrale Komponente festgelegt werden und können den Parametern des zentralen Lastmanagements entsprechen.

Der Master bedient beispielsweise die gleichen Schnittstellen-Aufrufe wie im zentralen Fall, z.B.:

- energyRequest() für neue Anfragen,
- sessionEnd() für das Beenden eines Ladevorgangs,
- sessionUpdate() für die Aktualisierung von Statuswerten,
- energySet() für das Setzen des Sollwerts einer Ladestation.

Für die Schnittstellen-Aufrufe können für den dezentralen Fall z.B. entsprechende XML-Nachrichten definiert und verwendet werden.

Fig.3 zeigt ein beispielhaftes Zustandsdiagramm für eine Ladestation. Zunächst erfolgt von einem initialen Zustand 301 ein Übergang in einen Zustand 302 zur Initialisierung der Ladestation. In einem nachfolgenden Zustand 303 wird das Overlay-Netzwerk initialisiert und in einem anschließenden Zustand 304 erfolgt die Wahl des Masters. Ist der Master ausgewählt, wird zu einer Abfrage 305 verzweigt. Falls die aktuelle Ladestation selbst als Master ausgewählt wurde, wird zu einem Zustand 306 verzweigt, es erfolgt eine Initialisierung (oder Umstellung) der aktuellen Ladestation als Master. Nachfolgend oder wenn die Abfrage 305 ergibt, dass die aktuelle Ladestation nicht als Master ausgewählt wurde, wird in einen Zustand 307 verzweigt, in dem die Ladestation (als Master oder als normaler Peer) aktiv ist. Ein Abbruch bedingt einen Wechsel in einen Zustand 308, in dem sich die Ladestation abmeldet und in einen finalen Zustand 309 (z.B. zum Abschalten oder zur Wartung der Ladestation) übergeht.

Das dezentrale Lastmanagement kann initial parametriert werden. Bevor eine Ladestation in einem dezentralen Lastmanagement aktiv wird, erfolgt eine Verbindung zu der zentralen Komponente. Zum Beispiel kann ein Installateur nach dem Aufstellen der Ladestation über einen Laptop mittels der zentralen Komponente die Parametrierung der Ladestation durchführen.

Beispielsweise kann sich eine Ladestation bei der zentralen Komponente anmelden und erhält die Peer-Liste der verfügbaren Ladestationen. Der Installateur kann nun notwendige Parameter einstellen (setzen oder aktualisieren). Diese Art der Parametrierung ist vergleichbar zu dem Szenario des zentralen Lastmanagements. Auch können Gruppen mit Kapazitätsbeschränkungen eingestellt werden und es können Ladestationen zu Gruppen zugeordnet (in Gruppen aufgenommen oder aus Gruppen gelöscht) werden. Nach Eingabe der Informationen wird die Ladestation eingestellt, indem beispielsweise alle Parameter zur Einstellung in einer Datei zusammengefasst und an die Ladestation übertragen werden.

Fehlerbehandlung

Im Folgenden sind beispielhaft Fehlerfälle aufgeführt und es wird jeweils eine entsprechende Fehlerbehandlung vorgeschlagen.

(a) Ausfall des Masters

Ein Ausfall des Masters ist ein kritischer Fehler, und eine entsprechende Fehlerbehandlung ist für eine fortgesetzte Funktion in einem dezentralen Szenario notwendig, da ohne Master die Lastverteilung nicht möglich ist.

Beim Ausfall des Masters soll die Funktion des Masters von einer anderen Ladestation übernommen werden. Vorzugsweise werden hierfür die folgenden Schritte durchgeführt:

(i) Wahl eines Backup-Masters sowie redundante Speicherung der Lastverteilung vor dem Ausfall des Masters;
(ii) Erkennung des Ausfalls des Masters;
(iii) Wahl eines neuen Masters unter den anfragenden Ladestationen.

Um eine aktuelle Lastverteilung durch den Ausfall des Masters nicht zu verlieren, wird diese z.B. bei einem vorab zu bestimmenden Backup-Master gespeichert. Der Backup-Master kann anhand seiner Peer-ID bestimmt werden (z.B. wird die zweitkleinste Peer-ID für den Backup-Master verwendet).

Dieser Ansatz kann für mehrere Backup-Master analog angewandt werden: Um mehrere Ausfälle von Mastern ausgleichen zu können, kann eine Liste mit einer Vielzahl von Backup-Mastern verwendet werden, wobei ein Master jede Nachricht von einer Ladestation auch an die Backup-Master weiterleitet. Somit kann sichergestellt werden, dass der Zustand beim Master auch bei den Backup-Mastern repliziert ist.

Hierbei ist es eine Option, dass nur die Nachrichten und nicht die komplette Lastverteilungsinformation weitergeleitet wird. Letztere können die Backup-Master anhand der übermittelten Informationen selbst bestimmen.

Ein Ausfall des Masters kann durch die erste unbeantwortete Anfrage einer Ladestation detektiert werden. Daraufhin kontaktiert die anfragende Ladestation den (ersten) Backup-Master und sendet an diesen die unbeantwortete Anfrage. Der Backup-Master fordert von dem Master eine sogenannte "Heartbeat"-Nachricht an (also eine Information, die anzeigt, dass der Master noch aktiv ist und kommunizieren kann). Falls der Backup-Master die "Heartbeat"-Nachricht des Masters erhält, wird die Anfrage von der Ladestation nicht bearbeitet, sondern auf den eigentlichen Master verwiesen (dies kann auch geschehen, indem von dem Backup-Master nichts unternommen wird, weil der Backup-Master davon ausgeht, dass der Master die Anfrage der Ladestation beantworten wird). Falls auch der Backup-Master den Master nicht erreichen kann (also im Falle einer ausbleibenden "Heartbeat"-Nachricht), wird angenommen, dass der Master ausgefallen ist und der Backup-Master aktiviert seinen Master-Modus und bearbeitet die Anfrage der Ladestation. Eine weitere Ladestation, deren Anfrage von dem ursprünglichen Master unbeantwortet bleibt, kontaktiert den neuen Master (vormals: Backup-Master), der die Anfrage der Ladestation direkt bearbeitet.

Vorzugsweise kann, um den Backup-Master als neuen Master zu initialisieren, an diesen der komplette Zustand für das Lastmanagement (Liste mit Lastverteilungen) übertragen werden.

Alternativ zur redundanten Speicherung kann, um den Backup-Master als neuen Master zu initialisieren, an diesen der komplette Zustand für das Lastmanagement (Liste mit Lasterverteilungen) übertragen werden oder dieser kann alle anderen Ladestationen kontaktieren und deren Zustand abfragen.

(b) Ausfall einer Ladestation

Falls eine Ladestation, die nicht der Master ist, ausfällt, können zwei Situationen unterschieden werden:

(i) Die ausgefallene Ladestation hatte keinen aktiven Ladevorgang;
(ii) Die ausgefallene Ladestationen war in einem aktiven Ladevorgang.

Im dem ersten Fall (i) hat der Ausfall keine Auswirkungen auf das Lastmanagement und kann somit unbehandelt bleiben.

Im dem zweiten Fall (ii) könnte der Ausfall der Ladestation Auswirkungen auf das Lastmanagement haben und somit eine Überwachung von Ladestationen erfordern.

Auch ist es möglich, dass der Ausfall der Ladestation eine Ursache hat, die von einer Überwachung nicht unterscheidbar sind: Beispielsweise kann nicht unterschieden werden, ob nur ein Kommunikationsproblem vorliegt oder ob die Ladestation ausgefallen ist. Wenn nur die Kommunikation zu der Ladestation ausgefallen ist, könnte diese unverändert einen Ladevorgang durchführen. In diesem Fall können die dieser Ladestation zugewiesenen Ressourcen nicht umverteilt werden.

Eine Option besteht darin, keine Überwachung der Ladestationen durchzuführen, insbesondere falls eine Umverteilung der Ressourcen unverändert bleiben soll. Somit kann eine Fehlerbehandlung für den Ausfall einer Ladestation je nach Anwendungsfall auch unterbleiben.

(c) Wiedereintritt eines vormaligen Masters

Falls ein ehemaliger Master nach seinem Ausfall wieder aktiv wird, ist vorzugsweise sicherzustellen, dass keine Konflikte und/oder Inkonsistenzen auftreten.

Beispielsweise ist es eine Möglichkeit, anzunehmen, dass ein Ausfall des Masters ein Indiz für weitere Ausfälle ist. So könnte vorgesehen sein, dass der vormalige Master seine Master-Rolle nicht wieder einnimmt. Um dies sicherzustellen, kann die Peer-ID des ehemaligen Masters geändert werden. Beispielsweise kann die Peer-ID um eine Versionsnummer erweitert werden, wobei z.B. die Versionsnummer als Präfix der Peer-ID vorangestellt wird. Die Wahl des Masters basiert weiterhin auf der kleinsten Peer-ID unter Berücksichtigung dieses Präfixes.

Für andere Ladestationen ist der ehemalige Master entweder als inaktiv markiert oder bei erneuter Anfrage antwortet dieser mit einer Aktualisierung seiner Peer-ID (umfassend die neuen Versionsnummer). Damit ist für die anfragende Ladestation bestimmbar, dass der ehemalige Master nicht mehr der aktuelle Master ist.

(d) Inkonsistente Peer-Listen

Um den Master eindeutig über alle Ladestation ermitteln zu können, wird die vorstehend genannte Peer-Liste verwendet. Entsprechend ist diese Peer-Liste konsistent zu halten.

Vorzugsweise kann die Anzahl der Ladestationen (z.B. innerhalb eines Clusters) klein (umfassend z.B. ca. 32 Ladestationen) sein. Jede Ladestation speichert die Peer-Liste mit den Peer-IDs aller anderen Ladestationen. Die Peer-Liste kann durch die zentrale Komponente parametriert werden.

Wenn eine Ladestation nachträglich hinzugefügt wird, wird die Peer-Liste anhand der zentralen Komponente parametriert. Die neue Ladestation erhält die aktualisierte Peer-Liste und kennt alle Ladestationen im Netz, die Ladestationen kennen aber - zunächst - nicht diese neue Ladestation. Vorzugsweise ist eine Synchronisation der Peer-Liste auf den Ladestationen erforderlich. Eine solche Synchronisation kann auf unterschiedliche Arten durchgeführt werden.

Beispielsweise kann vorgesehen sein, dass die neue Ladestation zunächst nicht als Master in Frage kommt; dies kann z.B. durch aufsteigende Peer-IDs sichergestellt werden, wobei die neue Ladestation die bisher höchste Peer-ID erhält und somit aktuell kaum als Master ausgewählt werden wird.

Zur Synchronisation der Peer-Listen, meldet sich die neue Ladestation (z.B. mittels einer join-Nachricht) bei allen anderen Ladestation an. Basierend auf dieser Anmeldung kann die Peer-Liste bei jeder Ladestation aktualisiert werden; der Empfänger ergänzt seine Peer-Liste um die Peer-ID und die IP-Adresse der neuen Ladestation.

Obwohl die Erfindung im Detail durch das mindestens eine gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

**Patentansprüche**

1. Verfahren zur Bereitstellung elektrischer Energie zum Laden von Elektrofahrzeugen,

   - bei dem eine Sitzung einen Ladevorgang für ein Elektrofahrzeug umfasst,
   - bei dem eine Lastverteilung für mehrere Sitzungen durch eine schrittweise Zuteilung der elektrischen Energie in Form eines Ladestroms eingestellt wird,
   - bei dem die Lastverteilung für mehrere Sitzungen schrittweise eingestellt wird, indem die Ladeströme für die mehreren Sitzungen nacheinander derart eingestellt werden, dass

     - in einem ersten Schritt die Sitzungen eingestellt werden, für die ein neuer Ladestrom gegenüber einem vorherigen Ladestrom reduziert werden soll,
     - dann in einem zweiten Schritt die Sitzungen eingestellt werden, für die ein neuer Ladestrom im Vergleich zu einem vorherigen Ladestrom erhöht werden soll, und
     - zwischen dem ersten und zweiten Schritt geprüft wird, ob der reduzierte Ladestrom auch erfolgreich erreicht wurde.

2. Verfahren nach Anspruch 1, bei dem die schrittweise Zuteilung der elektrischen Energie mehrere Schritte umfasst, zwischen denen eine vorgegebene Zeitdauer liegt.

3. Verfahren nach Anspruch 2, bei dem die elektrische Energie weiter reduziert wird oder abgeschaltet wird, falls nach Ablauf der vorgegebenen Zeitdauer die zugeteilte elektrische Energie nicht erreicht ist.

4. Verfahren nach einem der Ansprüche 2 oder 3, bei dem die vorgegebene Zeitdauer konstant oder variabel ist.

5. Verfahren nach Anspruch 1, bei dem die Sitzungen mit der erhöhten elektrischen Energie eingestellt werden, falls eine aktuell entnommene elektrische Energie kleiner oder gleich einem Sollwert für die elektrische Energie ist.

6. Verfahren nach einem der vorhergehenden Ansprüche,

   - bei dem zumindest ein Teil einer für eine Sitzung bereitgestellten elektrischen Energie, der nicht abgerufen wurde, mindestens einer anderen Sitzung bereitgestellt wird.

7. Verfahren nach Anspruch 6, bei dem diejenige elektrische Energie, die nicht von der Sitzung abgerufen wurde, vollständig oder im Wesentlichen vollständig der mindestens einen anderen Sitzung bereitgestellt wird.

8. Verfahren nach einem der Ansprüche 6 oder 7, bei dem ein Teil der elektrischen Energie, die nicht von der Sitzung abgerufen wurde, der mindestens einen anderen Sitzung bereitgestellt wird.

9. Verfahren nach einem der Ansprüche 6 bis 8, bei dem zumindest der Teil der für die Sitzung bereitgestellten elektrischen Energie, der nicht abgerufen wurde, der mindestens einen anderen Sitzung bereitgestellt wird, wenn zumindest der Teil der nicht abgerufenen elektrischen Energie einen vorgegebenen Schwellwert zumindest erreicht.

10. Verfahren nach Anspruch 9, bei dem zumindest der Teil der für die Sitzung bereitgestellten elektrischen Energie, der nicht abgerufen wurde, der mindestens einen anderen Sitzung bereitgestellt wird, wenn ein Maximum des zu unterschiedlichen Zeiten bestimmten nicht abgerufenen Teils der elektrischen Energie den vorgegebenen Schwellwert zumindest erreicht.

11. Verfahren nach einem der Ansprüche 6 bis 10, bei dem zumindest der Teil der für die Sitzung bereitgestellten elektrischen Energie, der nicht abgerufen wurde, der mindestens einen anderen Sitzung für eine vorgegebene Zeitdauer bereitgestellt wird.

12. Verfahren nach Anspruch 11,

- bei dem nach Ablauf der vorgegebenen Zeitdauer ermittelt wird, welche elektrische Energie von der Sitzung angefordert wird;
- bei dem, falls die der Sitzung bereitgestellte elektrische Energie nicht abgerufen wird, zumindest ein Teil der bereitgestellten elektrischen Energie der mindestens einen anderen Sitzung bereitgestellt wird.

13. Vorrichtung zum Bereitstellen elektrischer Energie zum Laden von Elektrofahrzeugen,

- wobei eine Sitzung einen Ladevorgang für ein Elektrofahrzeug umfasst,
- wobei die Vorrichtung eine Verarbeitungseinheit umfasst, die derart eingerichtet ist, dass

- eine Lastverteilung für mehrere Sitzungen durch eine schrittweise Zuteilung der elektrischen Energie in Form eines Ladestroms einstellbar ist,
- bei dem die Lastverteilung für mehrere Sitzungen schrittweise einstellbar ist, indem die Ladeströme für die mehreren Sitzungen nacheinander derart einstellbar sind, dass

- in einem ersten Schritt die Sitzungen eingestellt werden, für die ein neuer Ladestrom gegenüber einem vorherigen Ladestrom reduziert werden soll,
- dann in einem zweiten Schritt die Sitzungen eingestellt werden, für die ein neuer Ladestrom im Vergleich zu einem vorherigen Ladestrom erhöht werden soll, und
- zwischen dem ersten und zweiten Schritt prüfbar ist, ob der reduzierte Ladestrom auch erfolgreich erreicht wurde.

14. Vorrichtung nach Anspruch 13, bei der die Verarbeitungseinheit derart eingerichtet ist, dass

- zumindest ein Teil einer für eine Sitzung bereitgestellten elektrischen Energie, der nicht abgerufen wurde, mindestens einer anderen Sitzung bereitstellbar ist.

15. Vorrichtung nach einem der Ansprüche 13 oder 14, bei der die Vorrichtung zumindest teilweise in einer Ladestation eines Elektro-Fahrzeugs angeordnet ist.

**Claims**

1. Method for providing electrical energy for charging electric vehicles,

- in which a session comprises a charging operation for an electric vehicle,
- in which a load distribution for a plurality of sessions is set by a stepwise allocation of the electrical energy in the form of a charging current,
- in which the load distribution for a plurality of sessions is set stepwise by virtue of the charging currents for the plurality of sessions being set successively in such a way that
- in a first step the sessions for which a new charging current is intended to be reduced in comparison with a previous charging current are set,
- then in a second step the sessions for which a new charging current is intended to be increased in comparison with the previous charging current are set, and

- a check is made between the first and the second step to ascertain whether the reduced charging current has also been successfully reached.

2. Method according to Claim 1, in which the stepwise allocation of the electrical energy comprises a plurality of steps, with there being a predetermined time period between said steps.

3. Method according to Claim 2, in which the electrical energy is further reduced or disconnected if, once the predetermined time period has elapsed, the allocated electrical energy has not been reached.

4. Method according to either of Claims 2 and 3, in which the predetermined time period is constant or variable.

5. Method according to Claim 1, in which the sessions with the increased electrical energy are set if electrical energy drawn at that time is less than or equal to a setpoint value for the electrical energy.

6. Method according to one of the preceding claims,

- in which at least a proportion of an electrical energy provided for a session, which proportion has not been called up, is provided to at least one other session.

7. Method according to Claim 6, in which that electrical energy which has not been called up by the session is provided completely or substantially completely to the at least one other session.

8. Method according to either of Claims 6 and 7, in which a proportion of the electrical energy which has not been called up by the session is provided to the at least one other session.

9. Method according to one of Claims 6 to 8, in which at least the proportion of the electrical energy provided for this session which has not been called up is provided to the at least one other session if at least the proportion of the electrical energy not called up reaches at least a predetermined threshold value.

10. Method according to Claim 9, in which at least the proportion of the electrical energy provided for the session which has not been called up is provided to the at least one other session if a maximum of the proportion of the electrical energy not called up and intended for different times reaches at least the predetermined threshold value.

11. Method according to one of Claims 6 to 10, in which at least the proportion of the electrical energy provided for the session which has not been called up is provided to the at least one other session for a predetermined time period.

12. Method according to Claim 11,

- in which, once the predetermined time period has elapsed, the electrical energy which is required by the session is determined;
- in which, if the electrical energy provided to the session is not called up, at least a proportion of the provided electrical energy is provided to the at least one other session.

13. Apparatus for providing electrical energy for charging electric vehicles,

- wherein a session comprises a charging operation for an electric vehicle
- wherein the apparatus comprises a processing unit which is set up in such a way that
- a load distribution can be set for a plurality of sessions by a stepwise allocation of the electrical energy in the form of a charging current,
- the load distribution for a plurality of sessions can be set stepwise by virtue of the charging currents for the plurality of sessions being able to be set successively in such a way that
- in a first step the sessions for which a new charging current is intended to be reduced in comparison with a previous charging current are set,
- then in a second step the sessions for which a new charging current is intended to be increased in comparison with the previous charging current are set, and
- a check can be made between the first and the second step to ascertain whether the reduced charging current has also been successfully reached.

**14.** Apparatus according to Claim 13, in which the processing unit is set up in such a way that

    - at least a proportion of an electrical energy provided for a session which has not been called up can be provided to at least one other session.

**15.** Apparatus according to either of Claims 13 and 14, in which the apparatus is arranged at least partially in a charging station of an electric vehicle.


**Revendications**

**1.** Procédé de mise à disposition d'énergie électrique pour la charge de véhicules électriques,

    - dans lequel une session comprend un processus de charge pour un véhicule électrique,
    - dans lequel une répartition de charge est réglée par étapes pour plusieurs sessions par une attribution de l'énergie électrique sous la forme d'un courant de charge,
    - dans lequel la répartition de charge est réglée par étapes pour plusieurs sessions, grâce au fait que les courants de charge sont réglés successivement pour les plusieurs sessions de façon à ce que

        - dans une première étape, sont réglées les sessions pour lesquelles un nouveau courant de charge doit être réduit par rapport à un courant de charge précédent,
        - puis, dans une deuxième étape, sont réglées les sessions pour lesquelles un nouveau courant de charge doit être augmenté par rapport à un courant de charge précédent et
        - entre la première et la deuxième étape, il est vérifié si le courant de charge réduit a également été obtenu avec succès.

**2.** Procédé selon la revendication 1, dans lequel l'attribution par étapes de l'énergie électrique comprend plusieurs étapes entre lesquelles se trouve une période prédéterminée.

**3.** Procédé selon la revendication 2, dans lequel l'énergie électrique est encore réduite ou arrêtée si, après l'écoulement de la période prédéterminée, l'énergie électrique attribuée n'est pas obtenue.

**4.** Procédé selon l'une des revendications 2 ou 3, dans lequel la période prédéterminée est constante ou variable.

**5.** Procédé selon la revendication 1, dans lequel les sessions sont réglées avec l'énergie électrique augmentée si une énergie électrique actuellement prélevée est inférieure ou égale à une valeur de consigne pour l'énergie électrique.

**6.** Procédé selon l'une des revendications précédentes,

    - dans lequel au moins une partie de l'énergie électrique mise à disposition pour une session, qui n'a pas été prélevée, est mise à la disposition d'au moins une autre session.

**7.** Procédé selon la revendication 6, dans lequel l'énergie électrique qui n'a pas été prélevée par la session est entièrement ou sensiblement entièrement mise à la disposition de l'au moins une autre session.

**8.** Procédé selon l'une des revendications 6 ou 7, dans lequel une partie de l'énergie électrique qui n'a pas été prélevée par la session est mise à la disposition de l'au moins une autre session.

**9.** Procédé selon l'une des revendications 6 à 8, dans lequel au moins une partie de l'énergie électrique mise à disposition pour la session, qui n'a pas été prélevée, est mise à la disposition de l'au moins une autre session lorsqu'au moins une partie de l'énergie électrique non prélevée atteint au moins une valeur seuil prédéterminée.

**10.** Procédé selon la revendication 9, dans lequel au moins la partie de l'énergie électrique mise à disposition pour la session, qui n'a pas été prélevée, est mise à la disposition d'au moins une autre session lorsqu'un maximum de la partie non prélevée, déterminée à différents instants, de l'énergie électrique atteint au moins la valeur seuil prédéterminée.

**11.** Procédé selon l'une des revendications 6 à 10, dans lequel au moins la partie de l'énergie électrique mise à disposition pour la session, qui n'a pas été prélevée, est mise à la disposition de l'au moins une autre session pendant une période prédéterminée.

**12.** Procédé selon la revendication 11,

- dans lequel, après l'écoulement de la période prédéterminée, il est déterminé quelle énergie électrique est exigée par la session ;
- dans lequel, si l'énergie électrique mise à disposition n'est pas prélevée, au moins une partie de l'énergie électrique mise à disposition est mise à la disposition de l'au moins une autre session.

**13.** Dispositif de mise à disposition d'énergie électrique pour la charge de véhicules électriques,

- dans lequel une session comprend un processus de charge pour un véhicule électrique,
- dans lequel le dispositif comprend une unité de traitement qui est conçue de façon à ce que

- une répartition de charge peut être réglée pour plusieurs sessions grâce à une attribution par étapes de l'énergie électrique sous la forme d'un courant de charge,
- dans lequel la répartition de charge peut être réglée par étapes pour plusieurs sessions, grâce au fait que les courants de charge peuvent être réglés successivement pour les plusieurs sessions, de façon à ce que

- dans une première étape, sont réglées les sessions pour lesquelles un nouveau courant de charge doit être réduit par rapport à un courant de charge précédent,
- puis, dans une deuxième étape, sont réglées les sessions pour lesquelles un nouveau courant de charge doit être augmenté par rapport à un courant de charge précédent et
- entre la première et la deuxième étape, il est possible de vérifier si le courant de charge réduit a également été obtenu avec succès.

**14.** Dispositif selon la revendication 13, dans lequel l'unité de traitement est conçue de façon à ce que

- au moins une partie d'une énergie électrique mise à disposition pour une session, qui n'a pas été prélevée, peut être mise à la disposition d'au moins une autre session.

**15.** Dispositif selon l'une des revendications 13 ou 14, dans lequel le dispositif est disposé au moins partiellement dans une station de charge d'un véhicule électrique.

FIG 1

FIG 2

## FIG 3

## FIG 4

FIG 5

EP 2 726 317 B1

FIG 6

```
┌──────────┐
│          │──601
└──────────┘
     │
     ▼
┌──────────┐
│          │──602
└──────────┘
     │
     ▼
┌──────────┐
│          │──603
└──────────┘
     │
     ▼
┌──────────┐
│          │──604
└──────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009036816 A1

**In der Beschreibung aufgeführte Nicht-Patentliteratur**

- Data Networks. Max-Min Flow Control''-Verfahrens erfolgen. Prentice-Hall, 1992, 527, , 528